Europäisches Patentamt

European Patent Office

Office européen des brevets

(11) Numéro de publication: **0 383 713**
**A1**

## DEMANDE DE BREVET EUROPEEN

(21) Numéro de dépôt: **90480022.4**

(51) Int. Cl.5: **A01K 63/04**

(22) Date de dépôt: **13.02.90**

(30) Priorité: **15.02.89 FR 8902261**
**02.02.90 FR 9001484**

(43) Date de publication de la demande:
**22.08.90 Bulletin 90/34**

(84) Etats contractants désignés:
**DE GB IT**

(71) Demandeur: **Faure, Christian**
**Cottage Magali, 419 route de Fréjus**
**F-06210 Mandelieu(FR)**

(72) Inventeur: **Faure, Christian**
**Cottage Magali, 419 route de Fréjus**
**F-06210 Mandelieu(FR)**

(54) **Dispositif de filtration pour aquarium à eau de mer.**

(57) Dispositif de filtration de l'eau de mer utilisable notamment pour obtenir un équilibre biologique dans un aquarium comprenant une cartouche (10) à travers laquelle circule l'eau de mer, ladite cartouche (10) étant remplie d'un granulat dont les caractéristiques permettent de maintenir le PH de l'eau à une valeur alcaline prédéterminée telle que 8,3, valeur à laquelle les nitrites présents dans l'eau ne sont plus toxiques. Le granulat est sous forme de particules à structure très alvéolée et dont la plus grande dimension n'excède pas 0,5 cm.

FIG. 2

EP 0 383 713 A1

## DISPOSITIF DE FILTRATION POUR AQUARIUM A EAU DE MER

La présente invention concerne la filtration de l'eau de mer, et en particulier un dispositif de filtration de l'eau de mer permettant d'obtenir un équilibre biologique parfait dans un aquarium.

L'eau de mer d'un aquarium nécessite une filtration ayant les trois fonctions physique, chimique et biologique permettant la pérennité de la vie marine au sein de l'aquarium. Un dispositif de filtration pour aquarium à eau de mer doit donc pouvoir réaliser ces trois fonctions.

La filtration physique est facilement réalisée en faisant passer l'eau dans un filtre dont la porosité permet le passage de l'eau tout en retenant les impuretés physiques en suspension dans l'eau de mer.

Pour obtenir la filtration biologique, il est usuel d'ajouter dans le dispositif de filtration des matériaux ayant des propriétés antiseptiques.

Mais les aquariums à eau de mer comportent une difficulté majeure pour leur équilibre biologique que n'ont pas les aquariums à eau douce. En effet, dans ce type d'aquarium, l'eau se charge rapidement en nitrites si l'on n'y prend garde, et ces nitrites sont toxiques pour les poissons. On a constaté qu'une concentration dépassant 5 mg/l entrainait la mort des poissons.

Les nitrites qui s'accumulent dans l'eau de l'aquarium ne peuvent pas être évités. Ils proviennent principalement des déjections des poissons, des plantes mortes, des cadavres de poissons, mais également des excès de nourriture.

Les nitrites sont transformés en nitrates par des bactéries aérobies, les nitrates servant alors d'engrais aux plantes.

Une façon d'éliminer les nitrites est donc d'introduire ces bactéries dans l'eau de l'aquarium. Un tel procédé présente l'inconvénient d'exiger un entretien quasi-quotidien.

Le demandeur a découvert en fait que la seule présence des nitrites n'était pas suffisante pour expliquer la toxicité dans un aquarium. Il a en effet constaté que la valeur du PH avait une action qui s'ajoutait à celle dûe à la concentration en nitrites. Ainsi, si un dispositif de filtration introduit dans l'aquarium permet de maintenir un PH de 8,3, la toxicité des nitrites est moindre, et des accroissements importants de la concentration en nitrites dans l'aquarium n'ont pas d'effets nocifs sur les poissons.

L'objet de l'invention est donc un dispositif de filtration sous forme de cartouche à installer dans le circuit d'alimentation en eau de mer de l'aquarium, et qui maintient l'équilibre biologique de l'aquarium pendant une durée assez longue, sans avoir à se préoccuper de la concentration en nitrites.

Cet objet, ainsi que d'autres, est réalisé sous forme d'une cartouche à travers laquelle circule l'eau de mer, cartouche qui est remplie d'un granulat dont les caractéristiques permettent de maintenir le PH de l'eau à une valeur prédéterminée.

L'invention est expliquée dans la description qui suit faite en référence aux dessins où:

la figure 1 représente une coupe microscopique du granulat dont est rempli le dispositif de filtration selon l'invention, et

la figure 2 est le schéma d'une cartouche utilisée comme dispositif de filtration selon l'invention.

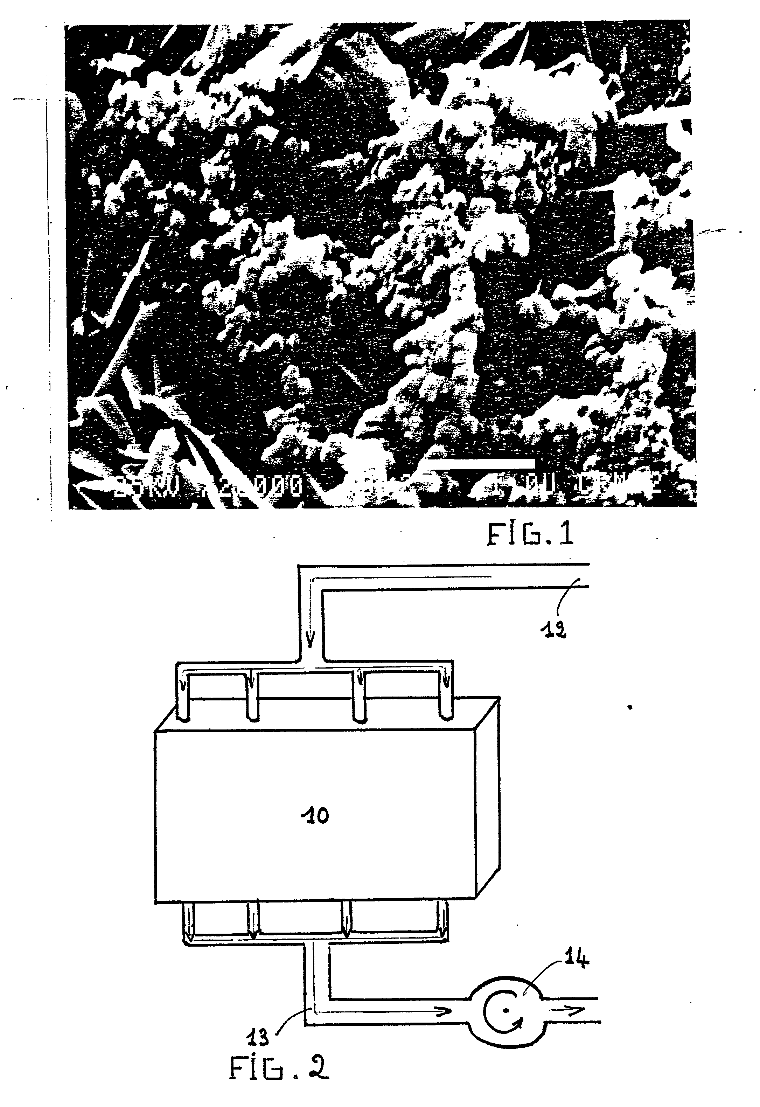

Le granulat utilisé pour le dispositif selon l'invention se présente sous forme de particules très dissymétriques dont coupe microscopique selon la figure 1, révèle l'existence de nombreuses alvéoles dont le volume est supérieur, en pourcentage, au volume du matériau proprement dit.

De façon à ce que l'eau appelée à circuler dans la cartouche puisse bien pénétrer le granulat, les particules ne doivent pas avoir une dimension excessive. Ainsi, leur dimension maximale ne doit pas dépasser 0,5 cm.

Le matériau du granulat comprend un composant basique lui affectant un PH d'une valeur prédéterminée. Cette valeur est de préférence égale à 8,3, valeur qui confère le meilleur équilibre biologique pour l'aquarium.

De façon générale, le granulat doit être léger, poreux, et doit présenter une grande surface de contact avec l'eau. Il ne doit entrainer aucune modification des constantes physico chimiques naturelles de l'eau de mer.

Les particules de granulat peuvent être obtenues par le concassage d'un bloc minéral expansé fabriqué selon le procédé qui suit.

On part d'un mélange anhydre comprenant:
- une matière riche en acide silicique comme par exemple du sable finement broyé et tamisé (55 %),
- un liant hydraulique qui peut être du ciment (28 %), ou tout matériau liant,
- une matière basique comme par exemple de la chaux vive broyée, tamisée (13 %), qui donnera, après réaction, de la chaux éteinte fournissant au granulat la valeur de PH prédéterminée,
- une matière riche en carbone pur comme par exemple du charbon de bois broyé et tamisé, pour obtenir
- une matière ayant des propriétés antiseptiques comme par exemple du sulfate de cuivre,
- un métal susceptible de réagir avec une solution basique pour produire de l'hydrogène, et
- un régulateur comme par exemple de la poudre d'aluminium (0.2%) et du sulfate de calcium (2 %).

Après que les composants ont été bien mélangés, l'ensemble est mouillé avec une solution basique telle que de la soude en quantité équivalent à 50 % en poids du mélange anhydre. Le mélange mouillé est mis alors dans un moule placé dans un autoclave à vapeur d'eau. Dans l'autoclave on obtient l'expansion du produit par dégagement d'hydrogène qui fournit la structure alvéolée du granulat, sa prise, et son durcissement.

Le bloc obtenu après refroidissement est placé dans un broyeur permettant d'obtenir une granulométrie correspondant à des particules dont la plus grande dimension est inférieure à 0,5 cm.

Il va de soi que, bien que l'exemple de réalisation décrit ci-dessus utilise de la chaux ou hydroxyde de calcium, d'autres composants basiques peuvent être utilisés tels que le carbonate de calcium, le sulfate de chaux,...dans la mesure où ce composant confère au granulat un PH de la valeur prédéterminée.

De même, tout autre procédé de fabrication du granulat pourra être utilisé, le principal étant d'aboutir à un granulat dont les caractéristiques répondent à l'objet de l'invention tel que défini précédemment. Ainsi, les alvéoles peuvent être formées par tout autre moyen ou procédé sans sortir du cadre de l'invention.

Le granulat ainsi formé est placé dans une cartouche 10 représentée sur la figure 2. Cette cartouche 10 comporte une arrivée d'eau 12 en provenance de l'aquarium et une sortie d'eau 13 chargée d'alimenter l'aquarium. Sur la sortie 13 se trouve une pompe 14 destinée à assurer la circulation de l'eau à travers la cartouche 10, de sorte que l'eau qui alimente l'aquarium et qui a circulé dans le granulat remplissant la cartouche 10, prend un PH de la valeur prédéterminée, par exemple 8,3, permettant l'équilibre biologique parfait dans l'aquarium. Au fur et à mesure que l'eau circule dans la cartouche, elle dissout le composant donnant la valeur basique aux particules qui gardent néanmoins un PH constant pendant une longue période de temps.

Les dimensions de la cartouche dépendent des dimensions de l'aquarium. Pour un aquarium donné, plus grande est la cartouche, plus longue est la période d'utilisation de la cartouche sans avoir besoin de renouveler le granulat. Ainsi, une cartouche de 20 litres, soit 25 cm x 40 cm x 2 cm, peut être utilisée pendant une période d'un an sans être renouvelée, pour un aquarium d'une capacité de 1000 litres.

Bien que l'invention ait été décrite selon un mode de réalisation particulier, il est évident que l'homme du métier pourra lui apporter toutes modifications utiles sans sortir du cadre de l'invention. Ainsi, l'invention pourrait être utilisée dans tout autre environnement qu'un aquarium à partir du moment où le dispositif de filtration a pour but de maintenir le PH de l'eau à une valeur prédéterminée.

## Revendications

1. Dispositif de filtration de l'eau de mer utilisable notamment pour obtenir un équilibre biologique dans un aquarium caractérisé en ce que le dispositif comprend une cartouche à travers laquelle circule l'eau de mer, ladite cartouche étant remplie d'un granulat dont les caractéristiques permettent de maintenir le PH de l'eau à une valeur alcaline prédéterminée.

2. Dispositif selon la revendication 1 dans lequel ledit granulat se présente sous forme de particules dont la plus grande dimension n'excède pas 0,5 cm, composées d'un matériau très alvéolé, le volume des alvéoles étant supérieur, en pourcentage, au volume du matériau proprement dit, ledit matériau comprenant un composant donnant au granulat un PH d'une valeur prédéterminée.

3. Dispositif selon la revendication 2 dans lequel ledit PH du granulat a une valeur d'environ 8,3.

4. Dispositif selon la revendication 3 dans lequel ledit composant est de l'hydroxyde de calcium.

5. Dispositif selon la revendication 3 dans lequel ledit composant est du carbonate de chaux.

6. Dispositif selon l'une quelconque des revendications précédentes dans lequel ladite cartouche se présente sous la forme d'un parallélépipède comportant un tuyau d'entrée d'eau en provenance de l'aquarium à sa partie supérieure, et un tuyau de sortie d'eau alimentant l'aquarium à sa partie inférieure muni d'une pompe qui provoque une circulation de l'eau de haut en bas dans ladite cartouche de telle sorte que le PH de l'eau qui alimente l'aquarium est maintenu à ladite valeur prédéterminée.

7. Procédé d'obtention du granulat utilisé dans le dispositif selon l'une quelconque des revendications précédentes, caractérisé en ce que ledit granulat est formé à partir d'un mélange anhydre constitué de 55 % de sable finement broyé et tamisé, de 28 % de ciment, de 13 % d'un composant basique, de charbon de bois broyé, et de sulfate de cuivre.

8. Procédé selon la revendication 7 dans lequel on ajoute audit mélange anhydre un métal susceptible de réagir avec une solution basique pour produire de l'hydrogène servant d'agent porogène, ledit mélange étant ensuite mouillé avec une solution basique à raison de 50 % en poids dudit mélange anhydre, puis moulé en autoclave à vapeur d'eau, et enfin concassé à une granulométrie inférieure à 0,5 cm après durcissement.

9. Procédé selon la revendication 7 ou 8 dans lequel on ajoute audit mélange anhydre un régulateur formé de 0,2 % de poudre d'aluminium et 2 % de sulfate de calcium.

10. Procédé selon la revendication 7, 8 ou 9 dans lequel la dite solution basique est une solution aqueuse de soude.

FIG.1

FIG.2

# RAPPORT DE RECHERCHE EUROPEENNE

Office européen des brevets

Numero de la demande

EP 90 48 0022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A- 482 392 (AQUARIUM SYSTEMS INC.) <br> * En entier * <br> --- | 1,3 | A 01 K 63/04 |
| A | FR-A-2 490 623 (DEGREMONT) <br> * Revendications 1,3-5 * <br> --- | | |
| A | EP-A-0 283 978 (HENKEL KOMMANDITGESELLSCHAFT) <br> * Notamment colonne 5, lignes 25-32 * <br> --- | | |
| A | DE-A-3 416 616 (E. DRECHLER) <br> --- | | |
| A | DE-B-1 204 013 (H. KRAFT) <br> --- | | |
| A | WO-A-8 102 844 (G. HIRS) <br> --- | | |
| A | DE-A-1 461 428 (I. MORR geb. VICK) <br> --- | | |
| A | DE-A-3 107 805 (P. MACK) <br> --- | | |
| A | EP-A-0 069 095 (THERMOBASE S.N.C.) <br> ----- | | |

### DOMAINES TECHNIQUES RECHERCHES (Int. Cl.5)

A 01 K 63/00
B 01 D 39/00
C 04 B 18/00

Le présent rapport a été établi pour toutes les revendications

| Lieu de la recherche | Date d'achèvement de la recherche | Examinateur |
|---|---|---|
| LA HAYE | 10-05-1990 | DEVISME F.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)